Europäisches Patentamt

**European Patent Office**

**Office européen des brevets**

(19)

(11) Publication number: **0 046 358**
A1

(12)

# EUROPEAN PATENT APPLICATION

(21) Application number: 81303623.3

(22) Date of filing: 07.08.81

(51) Int. Cl.³: **B 23 Q 15/22**, G 05 B 19/08

(30) Priority: 19.08.80 GB 8027039

(43) Date of publication of application: 24.02.82
Bulletin 82/8

(84) Designated Contracting States: **AT CH DE FR GB IT LI SE**

(71) Applicant: **Garland, John Joseph, 146 Bradshaw Road, Bradshaw Bolton BL2 3EN (GB)**

(72) Inventor: **Garland, John Joseph, 146 Bradshaw Road, Bradshaw Bolton BL2 3EN (GB)**

(74) Representative: **Allman, Peter John et al, Marks and Clerk Scottish Life House Bridge Street, Manchester M3 3DP (GB)**

(54) **A control system for use in conjunction with a machine tool.**

(57) Apparatus for controlling the movement of a machine tool element through space to and from an operating position. The apparatus comprises means for defining a matrix of node points within said space, including a starting node point at which the element is located at the beginning of a movement cycle, means for defining predetermined paths along which it is possible for the element to move from each of the node points, each path extending between two nodes, means for detecting the arrival of the element at any node point and means for selecting from said predetermined paths the path to be followed after detection of the arrival of the element at any node point.

2.    0046358

The present invention relates to a control system for use in conjunction with typically, a machine tool. The control system provides a simple method of programming the variable sequence paths and the auxiliary functions of the machine tool between a starting position and an operating position (the full depth position), during both the outward and return journeys of the machine tool.

Prior art control systems for machine tools have presented problems both to the control system manufacturer and user.

For the manufacturer it has been necessary to design a dedicated system to suit a particular application which involves many control engineering hours in designing and comissioning the system.

For the user the problem has lain in short batch production where for example a machine tool is designed to manufacture a range of different but similar components. With prior art control systems the need to change the programme slightly from one operation to the next has involved highly qualified personnel using an expensive programming terminal.

It is an object of the present invention to obviate or mitigate the above problems both to the manufacturer and the user.

It is also an object of the present invention to benefit the user by reducing the number of different logic circuits employed in what is basically a common control engineering application, hence reducing the number of varying control systems under his control.

3.

0046358

According to the present invention there is provided apparatus for controlling the movement of a machine tool element through space to an operating position, comprising means for defining a matrix of node points within said space, including a starting node point at which the element is located at the beginning of a movement cycle, means for defining predetermined paths along which it is possible for the element to move from each of the node points, each path extending between two nodes, means for detecting the arrival of the element at any node point and means for selecting from said predetermined paths the path to be followed after detection of the arrival of the element at any node point.

Preferably the present invention further comprises means for remembering a node point at which arrival of the element has been detected, until such time as the arrival of the element at the next node point is detected.

Preferably the means for remembering a node point comprises a latch which is operated when arrival of the element at the node point associated therewith is detected and which is tripped off when arrival of the element at the next node point is detected and the latch associated therewith is operated.

Preferably the present invention further comprises means for recognising the next node point in the path selected from a node point according to the direction of the selected path from the node point.

4.

0046358

Preferably the means for recognising the next node point in a selected path comprises a target node latch and two switches in series therewith, one of which switches represents the node point from which the element is moving and the other of which represents the direction of movement of the element from the node point from which the element is moving.

Preferably the switch representing the node point from which the element is moving is operated by the latch for remembering a node point.

Preferably the means for defining predetermined paths along which it is possible to move from each of the node points comprises a plurality of latches each of which when operated moves the element in a particular direction.

Preferably the means for selecting a path from said predetermined paths comprises a plurality of circuit breakers in respect of each node point each of which when closed operates a respective one of said plurality of latches determining the direction in which the element is moved.

The said circuit breakers may be sockets into which shorting plugs are inserted or data (BCD) modules into which programming keys are inserted.

As an alternative diode connecting plugs may be used.

As a further alternative data modules may be used giving a binary four bit output instead of the dedicated single output from a socket.

The means for defining the matrix of node points may comprise a plurality of limit switches located along each axis of the space through which the element moves.

5.

0046358

In this case the arrival of the element at a node point is preferably detected by operation of at least one of the limit switches corresponding to that node point.

Alternatively the means for coordinate definition of the matrix of node points may comprise means for producing an electrical encoder signal which varies according to the position of the element in space and means for producing a plurality of electrical target coordinate signals each of which corresponds to the output of the former encoder means when the element is at a node point. In this case the arrival of the element at a node point is preferably detected when the output of the former means corresponds to the output of the latter means in respect of the node point.

Preferably means are provided for separating the outward path, from the starting node point to the operating position, from the return path, from the operating position to the starting point.

Preferably said separating means comprises means for switching between two groups of the said circuit breakers associated with each node point, one of which groups is operational in the said outward path and the other of which is operational in the return path.

Preferably means are provided whereby the said separating means may be switched to the return path circuit breakers from any node in the outward path to return the element to the starting position.

Preferably means are provided whereby various machine tool functions may be selected including "coolant on", "slide to slide interlock", "machine tool traverse rate" and the "spindle speed" etc.

Preferably said means comprises further circuit breakers associated with each node point.

According to a further aspect of the present invention there is provided a method of controlling the movement of a machine tool element through space to an operating position, wherein a matrix of node points within said space are defined, including a starting node point at which the element is located at the beginning of a movement cycle, predetermined paths along which it is possible for the element to move from each of the node points are defined each path extending between two nodes, the arrival of the element at a node point is detected and the path to be followed after detection of the arrival of the element at any node point is selected from said predetermined paths.

With any sequencing device it is essential to know where the machinery under its control is at any particular part of the programme.

Furthermore it is equally important that the sequencer keeps step with the movements of the machinery.

To this end the present invention provides 'MATRIX NODES' which are unambiguous and the 'ON' (or 'OFF') state of any 'NODE' is retained and recalled on 'power up' after any power failure.

To provide effectively for 'emergency return' it is necessary to anticipate and energise the next matrix node (the target node) in the programmed sequence at the time when emergency return is energised. At that point the present invention will cancel the previously established node leaving the target node energised and providing the means to drive the machinery back along the axis upon which it has just embarked if the programmed sequence so dictates. Any call for 'emergency return' during the normal return path of the programmed sequence will be ignored by the present invention.

Embodiments of the present invention will now be described by way of example with reference to the accompanying drawings, in which :

Fig. 1 shows a nine node matrix and a typical feed path;

Fig. 2 is a circuit diagram of a node path determining circuit of an embodiment of the present invention;

Fig. 3 is a circuit diagram of a node latch and a node latch trip circuit of an embodiment of the present invention;

Fig. 4 is a circuit diagram of a target node establishing circuit of an embodiment of the present invention;

Fig. 5 is a node establishing circuit of an embodiment of the present invention using limit switches; and

Fig. 6 is another node establishing circuit of an embodiment of the present invention using closed loop control.

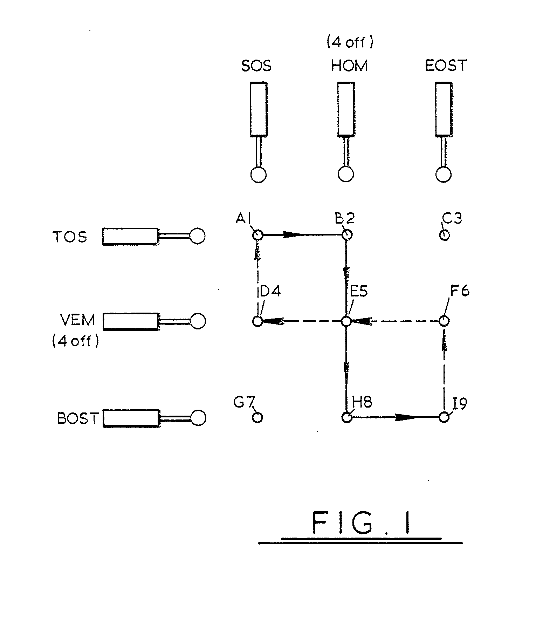

Referring to Fig. 1 there is shown a nine node matrix, the nodes being identified from the top left hand corner A1, B2, C3 etc. to I9 in the bottom right hand corner. The nodes are established by limit switches SOS, HOM, EOST, TOS, VEM and BOST. Initially a machine tool is positioned at one of the nodes e.g. node A1. During an operating cycle the machine tool is made to move along a predetermined path of nodes from node A1 to an operating position e.g. node I9. The tool is then returned to its start position, node A1, along either the same path of nodes or a different path of nodes as predetermined by the operator when the operational cycle is set up.

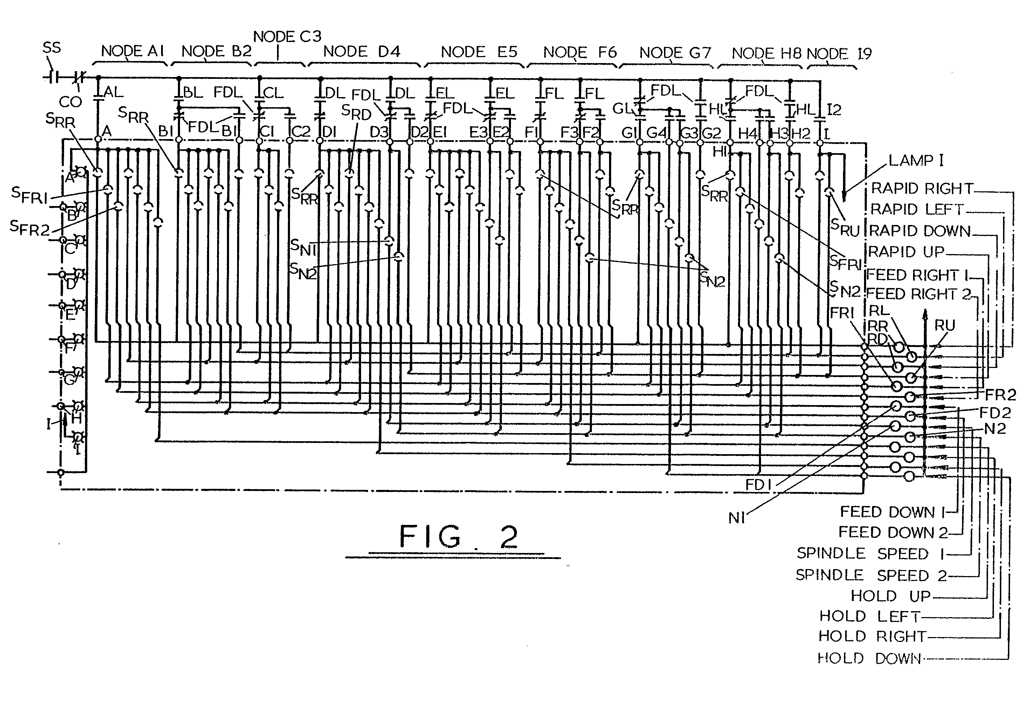

In Fig. 1 there is shown an outward path indicated by solid line and a return path indicated by broken line.  Operation of the control system according to the present invention as shown in the circuits of Figs. 2 to 5 will be described with reference to the outward and return paths shown in Fig. 1.  However, before this, a brief description of the major operational features of the remaining figures will be given.

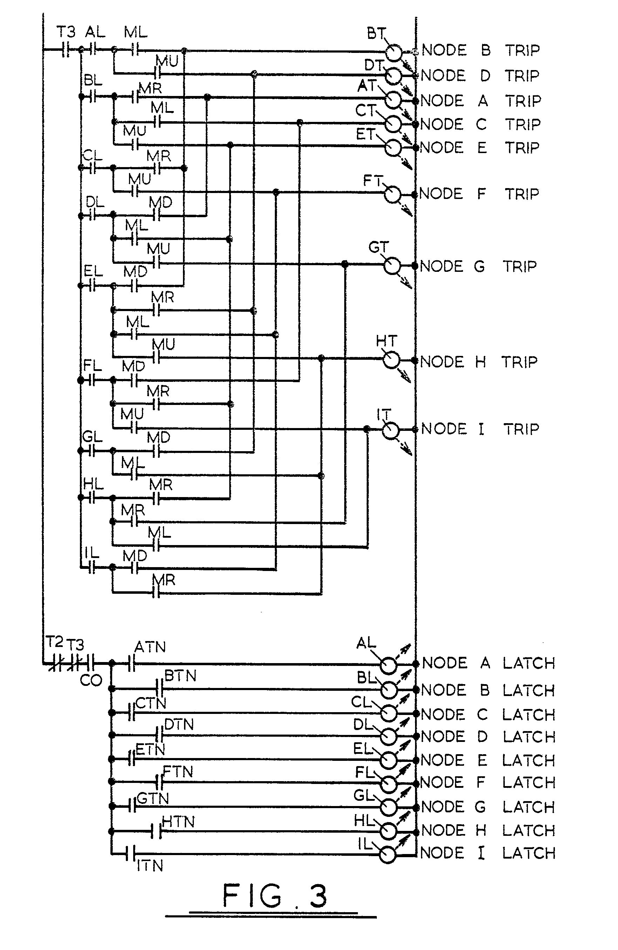

In Fig. 2, each node A1 to I9 has associated with it a NO switch or switches AL to IL respectively, which are closed by a respective node latch AL to IL (see Fig. 3).  Connected in series with the node latch switch(es) associated with each node A1 to I9 are a number of shorting sockets $S_{RR}$, $S_{FR1}$ etc. which when a plug is inserted connect the node latch switch in series therewith to a particular tool movement control relay $L^{RR}$, $L^{RL}$ etc.  Each relay L is responsible for a particular tool movement function, e.g. rapid left, rapid right, rapid up, rapid down etc. and thus when the node latch switch in series with a closed socket S is closed, indicating that the machine tool is at the node associated with that switch, the machine tool is moved onward from that node, according to the particular relay L in series with the socket S.

It will be noted that some of the nodes have a number of node latch switches associated therewith

9.                    0046358

e.g. node G7, node H8.  This is to ensure that there is no signal path from one node latch switch which has been operated, through the sockets of another node to a latch which should not in fact be turned on.  Of course, if the sockets S were replaced with diode connecting plugs this additional switch circuitry could be avoided.

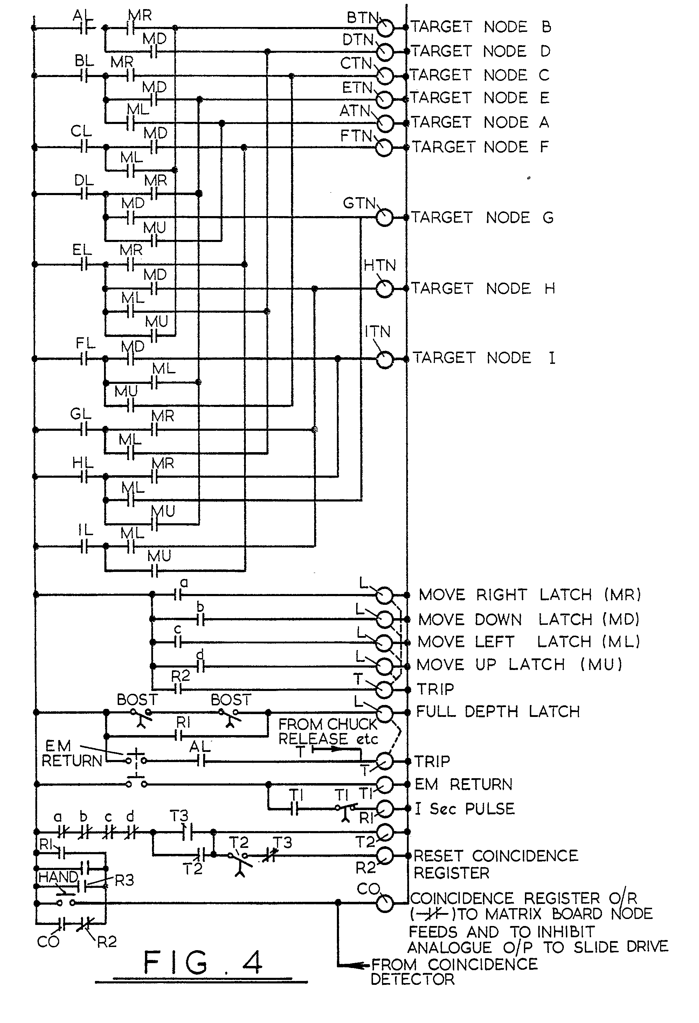

In order to distinguish between the outward path and the return path there are associated with each of nodes B2 to H8 a NC switch FDL and a NO switch FDL, operated by a full depth latch FDL (see Fig. 4). The full depth latch is operated when the machine tool has reached its operating position node I9 and the control system is thus ready to return to its starting position.  When the full depth latch is operated the sockets S, which are operational, are switched from those in series with NC switch FDL to those in series with NO switch FDL.  In fact in the circuit shown in Fig. 2 the only sockets which are operational in the return path are SRL "rapid left" and SRU "rapid up".

It will be noted that there is a NC switch CO in series with the supply line to the latch switches AL to IL and their associated socket circuitry.  When the machine tool moves from an established node to the 'target' node (the next node in the path) it operates a coincidence relay CO (see Fig. 4) which opens switch CO and removes power from the latches L.   This ensures that no two latches operating in opposition to each other are switched on during the period when two adjacent node latches AL to IL (see Fig. 3) are on together, whilst the established node is switched off and the target node is established. Switch CO does not close until the control system is ready to move the machine tool onto the next target node from the newly established node.

Finally it will be noted that as well as sockets and latches for controlling the direction of movement of the machine tool there are sockets and latches for controlling the rate of movement, the spindle speed and for 'holding' the machine tool against any dead stop position on one axis whilst movement continues along the other axis.  The purpose of this circuitry is quite conventional and its use in the control system therefore requires no explanation.

Referring now to Fig. 3 there is shown the circuitry for establishing a new node and for tripping out a previous node.

Node latches AL to IL are of a type which hold on until tripped off by respective trip latches AT to IT, even if their power supply is removed.  As a result whenever power is switched on to the control system one of the latches AL to IL will be on. Normally the latch held on when the control system is switched on will be latch AL since the operational cycle will terminate at node A1.  However, should power to the control system be switched off during an operational cycle, whichever of the nodes was established when power was lost will still be established when power is restored.

In order to establish a new node it is necessary to close NO switch CO and one of NO switches ATN to ITN. Switch CO is controlled by coincidence latch CO (see Fig. 3) which is operated when a target node is reached. Switches ATN to ITN are controlled respectively by target node relays ATN to ITN which are operated when a target node is set up as will be described hereinbelow. In order to prevent more than one new node at a time being established NC switches T2 and T3 are provided in series with switch CO.

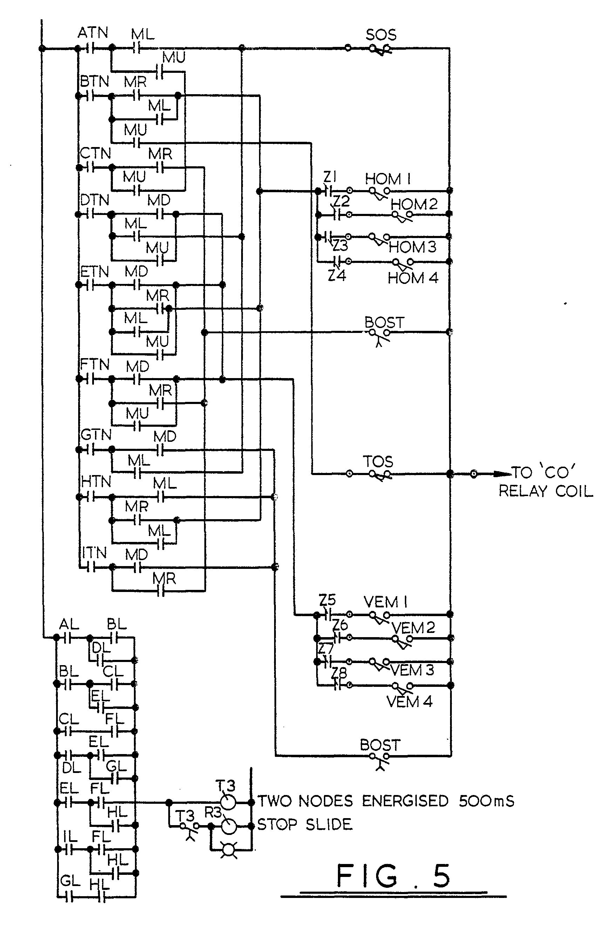

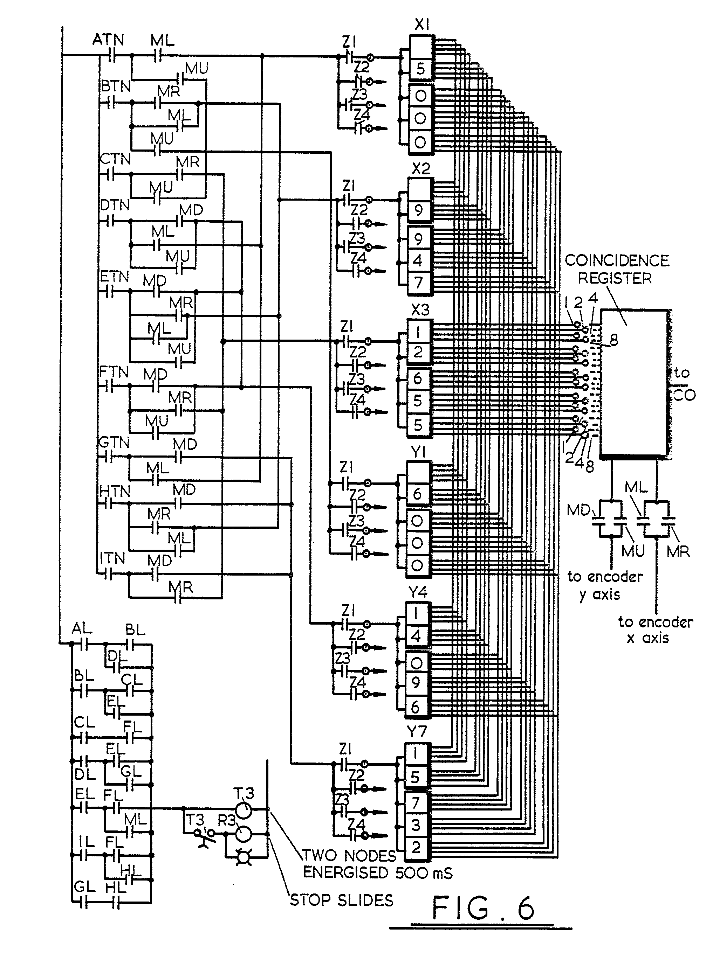

Immediately two adjacent nodes are established together timing relay T3 (see Fig. 5 or 6) operates, opening NC switch T3 (bottom right hand corner Fig. 3) and thus preventing any further nodes being established. Since switch T3 closes again as soon as the node latch corresponding to the previous node is tripped off switch T2 is also provided. Operation of timing relay T3 results in timing relay T2 /(see Fig. 4) being operated. As a result switch T2 opens fractionally after switch T3 has opened, but stays open until the machine tool is ready to move onto the next target node.

As stated above once two adjacent nodes are established together/relay T3 operates. This closes NO switch T3 (top right hand corner Fig. 3) and as a

result the previous node's trip latch ATN to ITN is operated. Switches ML, MR, MU and MD correspond respectively to the machine tool moving left, right, up and down and are operated respectively by latches ML, MR, MU and MD (see Fig. 4) as will be explained hereinafter. It will be seen that from any node, indicated by switches AL to IL, it is possible to operate any trip latch of an adjacent node, the switches ML, MR, MU and MD, being arranged in series with the switches AL to IL such that the node tripped off is a previous node.

Referring now to Fig. 4 there is shown the circuitry for establishing a target node. In a similar manner to that in Fig. 3 the circuitry associated with switches AL to IL, makes it possible to operate any target latch of an adjacent node except in this instance the switches ML, MR, MU and MD are arranged in series with switches AL to IL such that the target node relay operated is one to which the machine tool is moving towards.

In addition, to the target node establishing circuitry, the circuit of Fig. 4 also comprises the coincide relay set and reset circuitry, an emergency return circuit, the full depth latch control circuitry and latches ML, MR, MU and MD.

Latches MR, MD, ML and MU are operated respectively by NO switches a, b, c and d. In turn switches a, b, c and d are controlled by the direction of move-

13.

0046358

ment of the machine, which is of course determined by the insertion of plugs in sockets S (see Fig. 2), a respective one of switches a, b, c or d being closed when the machine tool moves in the direction of its corresponding latch. The latches ML, MR, MU and MD are of the type which remain on until tripped off by latch trip T. Latch trip T is controlled by the coincidence relay reset relay R2 through switch R2. In this way only when a new node has been established and the machine tool is ready to move towards the next target node is the latch/T trip operated by virtue of the operation of relay R2. It will be realised that relay R2 also resets relay CO resulting in NC switch CO (see Fig. 2) closing and supplying power to the circuit of Fig. 2. The sockets S associated with the newly established node are now energised and thus the machine tool commences to move again by virtue of relays RR, RL etc. According to the direction taken from the node one of switches a, b, c or d is closed operating a respective one of latches MR, MD, ML and MU. Whichever of latches MR, MD, ML or MU is operated closes a corresponding switch in the target node circuitry and a new target node is established.

As indicated above when full depth, the operating position, is reached the machine tool is ready to return to its starting position. In order to distinguish between the outward and return paths full depth latch FDL is operated when full depth is reached to switch the sockets S operational with
each node latch switch AL to IL (see Fig. 2) to those
directing the machine tool back to its starting
position. Since the full depth position will normally be
node I9 limit switch timers BOST (bottom of stroke) and
EOST (end of stroke) which are both closed/when node
after a time delay
I9 is reached, are used to operate latch FDL. A latch
trip T is associated with latch FDL to trip it off
when a signal indicating that the end of the return
path has been reached is passed down connection T.

In the event of an emergency, where it is not
required or indeed desirable to switch off the
machine provision is made for returning the machine
tool to its starting position from any node in the
outward path. In order to achieve this switch EM
return is closed, which has the effect of closing
switch R1 for a period sufficient to operate latch
FDL. In order to ensure that the machine tool
returns to its starting position from any node in
the outward path it is necessary to provide a return
path from each node in the outward path not in the
normal return path to the nearest node in the return
path. This is achieved simply by inserting plugs
into the sockets S (see Fig. 2) associated with the
return circuitry for the nodes not on the normal
return path to direct the machine tool to a node on
the return path. Since it is not desirable to return
to the finish of an operational cycle when emergency return has been activated, when switch EM is closed and the machine tool has returned to node A1, switch AL in series with FDL trip latch T is closed operat-
ing latch/T̲r̲i̲p̲ and tripping off latch FDL. The control system is now ready to start the operational cycle again.

The coincidence latch set and reset latch circuitry will be described in the description of the operation of the control system contained hereinbelow.

Referring to Fig. 5 there is shown circuitry for determining the physical positions of the nodes A1 to I9 and for establishing when a target node has been reached.

In order to determine the physical positions of the nodes limit switches SOS, TOS, HOM1 to 4, VEM 1 to 4, EOST and BOST are situated along the two axes of movement of the machine tool slide. The switch positions are as follows:

SOS Top left hand corner  
HOM Horizontal mid position  } Horizontal Axis  
EOST Top right hand corner  

TOS Top left hand corner  
VEM Vertical mid position  } Vertical Axis  
BOST Bottom left hand corner  

Four horizontal mid position and four vertical mid position switches are provided to enable the position of nodes D4, E5 and F6 along the horizontal axis and nodes B2, E5 and H8 along the vertical axis to be switched simply by closing one of switches Z1 to Z4 or Z5 to Z8 respectively.

Switches ATN to ITN are operated by target node relays ATN to ITN (see Fig. 4) and accordingly correspond to the target nodes. Connected to each of switches ATN to ITN are various combinations of switches ML, MR, MU and MD arranged such that a target node can be reached from any adjacent node by moving in the direction indicated by the switch. When the target node is reached it operates a pair of switches from the horizontal and vertical axes one of which makes a signal path with the target node switch and machine tool movement direction switch already closed to provide a coincidence signal which operates coincidence relay CO.

The result of energising relay CO is that the target node is established i.e. corresponding latch AL to IL (see Fig. 3) is operated. The effect of this is that two adjacent node latches AL to IL are now energised together. In the bottom left hand corner of Fig. 5 circuitry is provided for detecting when this condition occurs, when it does timing relay T3 being energised. The effect of this, as described with reference to Fig. 3, is to isolate the node latches AL to IL and to cause the node latch trip latches AT to IT to be powered up.

As soon as the trip latches AT to IT are powered up the previous node latch is tripped off.

17.                        0046358

As a result power to timing relay T3 is lost, switching it off. Should, however, two adjacent nodes remain established for a period determined by time delay switch T3, the slide is stopped from moving and relay R3 is energised. Relay R3 is energised to close switch R3 (see Fig. 4) so that in the event of power to the control system being switched off and on during this condition, latch CO is held on, preventing by reason of switch CO (see Fig. 2) power being supplied to relays RR, RL etc. (see Fig. 2).

Finally referring to Fig. 6 the circuit shown is identical to that of Fig. 5 except in the way the physical positions of the nodes are determined. In the circuit of Fig. 6 the node positions are established using a digital coordinate system. Attached to the machine tool slide is an encoder which gives separate binary signal outputs for both the x and y axes corresponding to the coordinates of the machine tool slide along the x and y axes.

Either the x axis or y axis binary signal is fed to a coincidence register via one of respective pairs of switches ML and MR, and MU and MD. In this manner only the coordinate of the machine tool along the axis of the direction of movement of the machine tool is input to the coincidence register. Also input to the coincidence register is a binary signal corresponding to the coordinate of the target node position along the axis selected by switch ML, MR, MU or MD.

18.
0046358

The coordinates of the positions of the nodes along the horizontal and vertical axes are determined by blocks X1, X2, X3, Y1, Y4 and Y7. The output of each of these blocks corresponds to the output of the encoder on the machine tool slide when the machine tool slide is in the same position as that set for each of the blocks. A block is only turned on when it is connected to supply via a target node switch ATN to ITN and one of switches MR, ML, MU or MD. When the changing output of the encoder corresponds to the output of a turned on block then the coincidence register outputs a signal to the coincidence relay CO.

Complete operation of the control system according to the present invention will now be described with reference to the circuits of Figs. 2 to 5 with respect to the outward and return paths shown in Fig. 1.

Commencing at the beginning of an operational cycle, the machine tool is at node A1 and therefore latch AL is operational and its associated switches are closed. In the outward path shown in Fig. 1 the first target node is node B2. In order to reach node B2 it is necessary to move right from node A1. This is achieved by inserting a plug in the sockets $S_{RR}$ connected in series with switch AL (see Fig. 2). In this condition power is supplied to relay RR as soon as the start switch SS is closed and the machine

19. 0046358

tool slide is moved rapidly right.  It will be noted
that switch AL in Fig. 3 is closed, but/that this has
no effect because switch T3 in series with it is open
and likewise switch AL/is closed, but that this has
in Fig. 4
no effect because neither of switches MR and MD in
series with it are closed until latch   MR or MD
respectively is operated by the machine tool moving
right or down.

As soon as switch SS is closed, starting the
operational cycle relay RR  is operated causing the
machine tool to move rapidly right.  Movement of the
machine tool rapidly right causes NO switch 'a' to
close, resulting in latch MR being operated and switches
MR being closed.  The closure of switch MR (see Fig.
4) results in target node relay BTN being operated and
switches BTN  being closed.  Node B2 is now established
as the target node.  Initially closure of switches
BTN (see Figs. 3 and 5) has no effect since switch CO
(see Fig. 3) and limit switch HOM (see Fig. 5) are open.
However when the machine tool reaches node B2,
indicated by limit switch HOM, limit switch HOM is
closed and a signal is sent to coincidence relay CO
(see Fig. 4).

The operation of relay CO opens NC switch CO
(see Fig. 2) in the supply line to the relay RR and
to the rest of the circuit of Fig. 2 and as a result
the machine tool stops moving.  This in turn opens
NO switch 'a' and closes NC switch 'a' (see Fig. 4).

　　　　　　　　　　　　　　0046358

At the same time NO switches CO (see Figs. 3 and 4) are closed which results in relay CO being held on through switch CO (see Fig. 4) and node latch BL being operated through switches CO, T2, T3 and BTN (see Fig. 3). Node B2 is now established but so too is the previous node A1. The next stage in the operation of the control system is to trip off node latch AL.

As a result of node latches AL and BL being in operation together switches AL and BL are closed. As a result the adjacent node detector circuit (bottom left hand corner Fig. 5) conducts operating timing relay T3. Upon operation of timing relay T3 NC switch T3 (see Fig. 3) opens, thus preventing any further node latches from being established. At the same time NO switch T3 (see Fig. 3) closes and trip latch AT is operated, through switches BL and MR, which trips off node latch AL. As a result of latch AL being tripped off switches AL open. This has the effect of switching off relay T3, but not before NO switch T3 (see Fig. 4) has been closed operating timing relay T2.

Relay T2 opens NC switch T2 (see Fig. 3) and prevents any further latches from being established when NC switch T3 closes again. There is a period of overlap between NC switches T2 and T3 (see Fig. 3) when both are open which prevents any sneak operation of a latch. At the same time timing relay T2 closes NO switch T2 ensuring that it is held on when timing relay

0046358

T3 switches off.

When timing relay T3 is de-energised, which occurs immediately latch AL·is tripped, the NC switch T3 in series with the coincidence relay reset relay R2 will close, energising relay R2. Time delay switch T2 is provided to prevent premature operation of relay R2. Operation of relay R2 causes trip latch T to trip off latch MR enabling a new machine tool movement direction latch to be established when the machine tool commences to move again. In addition it opens NC switch R2 breaking the supply of power to relay CO and turning it off. This opens NO switch CO in the supply line to the node latches, ensuring that they remain isolated when timing relay T2 switches off and closing NC switch CO in the supply line to the sockets S (see Fig. 2).

At this stage latch BL is operative, which establishes node B2 and NC switch CO (see Fig. 2) is closed supplying power to the sockets S associated with switch BL (see Fig. 2). The next target node is E5, established by inserting a plug in the socket SRD in series with switch BL (see Fig. 2). This results in power being supplied to relay RD and the machine tool being moved rapidly downwards. Movement of the machine tool downwards open NC switch 'b', removing power from timing relay T2 and switching it off, and closes NO switch 'b' in series with latch MD resulting in it being operated. As a result of latch MD being operated switches MD close. This in turn results in target node relay ETN being operated through switches BL and MD in series with it.

When the machine tool reaches node E5 limit switches VEM and HOM are closed and as a result a signal is passed to coincidence latch CO via switches ETN, MD and VEM. As a result power is removed from the circuit of Fig. 2 and movement of the machine tool is arrested. At the same node latch EL is operated establishing node E5. When node E5 is established switches EL are closed and because latch BL is still operational timing relay T3 is turned on. This in turn results in node latch trip BT being operated through switches EL and MD and node latch BL being turned off, and the node latches AL to IL being isolated by first switch T3 and then switch T2. After a delay coincidence relay CO is turned off and the move down latch MD is tripped off by latch trip T as described hereinbefore.

As a result at this stage/of the operational cycle node E5 is established and the machine tool is ready to move onto the next target node which in the case of the outward path of Fig. 1 is H8 and is established by inserting a plug in the socket $S_{FD1}$ in series with switch EL (see Fig. 2).

The above sequence is repeated for each node until the operational position, node I9, is reached. When the machine tool reaches node I9 it closes limit switches EOST and BOST and latch FDL is operated. It will be noted that time delay limit switches are provided in respect of limit switches EOST and BOST.

0046358

This is because a limit switch is operated by a moving object and since the positions of the nodes associated with switches EOST and BOST are thedead stop position the limit switches have to be set slightly back and a time delay provided before they come into effect. As a result of latch FDL being operated NC switches FDL open and NO switches FDL close, switching the control system to the return sockets.

From node I9 the next node in the return path is node F6. To reach node F6 the machine tool must be moved up. This is achieved by inserting a plug in the socket RU in series with switch IL (see Fig. 2). This connects relay RU to the power supply and the machine tool moves. Operation of the control system up to the establishment of node F6 and the tripping off of node I9 is the same as previously described.

The next target node in the return path is node E5 and node E5 is reached by inserting a plug in socket RL in series with NO switch FDL and switch FL (see Fig. 2). Operation of the control system for each of the nodes on the return path is the same as described above.

When the machine tool slide has returned to node A1 and the operational cycle is complete a signal is sent via connection T to the trip latch T associated with latch FDL. The signal may be initiated by any appropriate operation e.g. by releasing the tool from the chuck. The control system is thus returned to its starting condition.

It will be appreciated that the control system according to the present invention may be adapted to a 3 dimensional node matrix by making provision for the machine tool to be moved backwards and forwards as well as up, down, left and right.

It will be appreciated that in the embodiment of the present invention described during an emergency return or a normal return sequence the slide will automatically find "start position" once either "top of stroke" or "start of stroke" position is reached, hence eliminating the need to programme a return path between nodes C, B and A and also between nodes G, D and A.

It will also be appreciated that provision may be made in the present invention whereby a signal is generated at any node to signal the end of outward movement of the programme and hence initiate the return sequence, by provision of an additional socket at each node position. This feature allows for the use of only a fraction of possible programme capacity.

25.                              0046358

CLAIMS:

1. Apparatus for controlling the movement of a machine tool element through space to and from an operating position, comprising means for defining a matrix of node points within said space, including a starting node point at which the element is located at the beginning of a movement cycle, means for defining predetermined paths along which it is possible for the element to move from each of the node points, each path extending between two nodes, means for detecting the arrival of the element at any node point and means for selecting from said predetermined paths the path to be followed after detection of the arrival of the element at any node point.

2. Apparatus according to claim 1, characterised in that said apparatus further comprises means for remembering a node point at which arrival of the element has been detected, until such time as the arrival of the element at the next node point is detected.

3. Apparatus according to claim 2, characterised in that the means for remembering a node point comprises a latch which is operated when arrival of the element at the node point associated therewith is detected and which is tripped off when arrival of the element at the next node point is detected and the latch associated therewith is operated.

4. Apparatus according to any preceding claim, characterised in that said apparatus further comprises

26. 0046358

means for recognising the next node point in the path selected from a node point according to the direction of the selected path from the node point.

5. Apparatus according to claim 4, characterised in that means for recognising the next node point in a selected path comprises a target node latch and two switches in series therewith, one of which switches represents the node point from which the element is moving and the other of which represents the direction of movement of the element from the node point from which the element is moving.

6. Apparatus according to claim 5, characterised in that the switch representing the node point from which the element is moving is operated by the latch for remembering a node point.

7. Apparatus according to any preceding claim, characterised in that the means for defining predetermined paths along which it is possible to move from each of the node points comprises a plurality of latches each of which when operated moves the element in a particular direction.

8. Apparatus according to claim 7, characterised in that the means for selecting a path from said predetermined paths comprises a plurality of circuit breakers in respect of each node point each of which when closed operates a respective one of said plurality of latches determining the direction in which the component is moved.

9. Apparatus according to claim 8, characterised in that the circuit breakers comprise sockets into which shorting plugs are inserted.

10.    Apparatus according to claim 8, characterised in that the circuit breakers comprise data (BCD) modules into which programming keys are inserted.

11.    Apparatus according to claim 9, characterised in that the data modules give a binary four bit output.

12.    Apparatus according to any preceding claim, characterised in that the points may comprise a plurality of limit switches located along each axis of the space through which the element moves.

13.    Apparatus according to claim 12, characterised in that the arrival of the element at a node point is detected by operation of at least one of the limit switches corresponding to that node point.

14.    Apparatus according to any of claims 1 to 11, characterised in that the means for coordinate definition of the matrix of node points may comprise means for producing an electrical encoder signal which varies according to the position of the elemnt in space and means for producing a plurality of electrical target coordinate signals each of which corresponds to the output of the former encoder means when the component is at a node point.

15.    Apparatus according to claim 14, characterised in that the arrival of the element at a node point is detected when the output of the former means corresponds to the output of the latter means in respect of the node point.

16.    Apparatus according to any preceding claim,

28.

0046358

characterised in that means are provided for separating the outward path, from the starting node point to the operating position, from the return path, from the operating position to the starting point.

17. Apparatus according to claim 16, characterised in that said separating means comprises means for switching between two groups of the said circuit breakers associated with each node point, one of which groups is operational in the said outward path and the other of which is operational in the return path.

18. Apparatus according to claim 17, characterised in that means are provided whereby the said separating means may be switched to the return path circuit breakers from any node in the outward path to return the component to the starting position.

19. Apparatus according to any preceding claim, characterised in that means are provided whereby various machine tool functions may be selected including "coolant on", "slide to slide interlock", "machine tool traverse rate" and the "spindle speed" etc.

20. Apparatus according to claim 19, characterised in that said means comprises further circuit breakers associated with each node point.

21. Apparatus according to any preceding claim, characterised in that means are provided whereby the machine tool element may be switched to an "emergency return" path from any node point in the outward path so as to return the machine tool element to the starting node point.

29.

0046358

22. Apparatus according to claim 21, characterised in that where a node point in the outward path is not on the return path from the operating position, means are provided whereby the machine tool element follows a predetermined path from the said node point to a node point in the return/path from the operating position.

23. A method of controlling the movement of a machine tool element through space to and from an operating position, wherein a matrix of node points within said space are defined, including a starting node point at which the component is located at the beginning of a movement cycle, predetermined paths along which it is possible for the element to move from each of the node points are defined each path extending between two nodes, the arrival of the element at a node point is detected and the path to be followed after detection of the arrival of the element at any node point is selected from said predetermined paths.

24. A method according to claim 23, characterised in that the detection of the arrival of the element at a node point is retained and recalled on "power up" after any power failure.

25. A method according to claim 21 or 22, characterised in that the machine tool element may be switched to an "emergency return" path from any node point in the outward path so as to return the machine tool element to the starting node point.

26. A method according to claim 23, characterised in that where a node point in the outward path is not on the return path from the operating position, the machine tool element follows a predetermined path from the said node point to a node point in the return

path from the operating position.

27.   Apparatus substantially as hereinbefore described with reference to the accompanying drawings.

28.   A method substantially as hereinbefore described with reference to the accompanying drawings.

Claim(s) No 27 & 28 deemed to be abandoned

0046358

(4 off)

SOS    HOM    EOST

TOS

VEM
(4 off)

BOST

A1    B2    C3

D4    E5    F6

G7    H8    I9

## FIG. 1

FIG. 2

$$\underline{FIG.3}$$

FIG. 4

0046358

FIG.5

0046358

FIG. 6

0046358
EP 81 30 3623

**European Patent Office**

**EUROPEAN SEARCH REPORT**

Application number

## DOCUMENTS CONSIDERED TO BE RELEVANT

| Category | Citation of document with indication, where appropriate, of relevant passages | Relevant to claim |
|---|---|---|
| X | <u>GB - A - 1 090 654</u> (B. ELLIOTT<br><br>* the whole document * | 1-4,6-9,12,23 |
| | <u>US - A - 3 042 171</u> (G.R. ROSE, GENERAL MILLS)<br><br>* column 1, lines 13-22,33-48, 49-56 * | 18,24 |
| | <u>DE - A - 1 003 838</u> (F. WERER)<br><br>* column 2, line 50 - column 3, line 1 * | 3 |
| | ------ | |

**CLASSIFICATION OF THE APPLICATION (Int. Cl.)**

B 23 Q 15/22
G 05 B 19/03

**TECHNICAL FIELDS SEARCHED (Int. Cl.)**

G 05 B 19/08
        19/04
B 23 Q 15/22
        15/24

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 26-11-1981 | CORNILLIE |

EPO Form 1503.1  06.78